# EUROPÄISCHE PATENTSCHRIFT

(11) **EP 0 831 270 B1**
(45) Veröffentlichungstag und Bekanntmachung des Hinweises auf die Patenterteilung: **11.09.2002**
(21) Anmeldenummer: 97112716.2
(22) Anmeldetag: 24.07.1997
(51) Int. Cl.: F16M 11/28, F16M 11/26

(54) **Teleskopstativ**
Telescopic support
Support télescopique

(30) Priorität: 18.09.1996 DE 19637962
(43) Veröffentlichungstag der Anmeldung: 25.03.1998
(73) Patentinhaber: Wella Aktiengesellschaft, 64274 Darmstadt (DE)
(72) Erfinder: Mattinger, Detlef, 64404 Bickenbach (DE); Anthes, Peter, 64711 Erbach (DE); Schmitt, Bernd, 36088 Hünfeld-Michelsrombach (DE)

(56) Entgegenhaltungen:
- DE-C- 323 354
- DE-U- 1 979 346
- FR-A- 2 626 052
- US-A- 2 490 125

## Beschreibung

Die Erfindung betrifft ein Teleskopstativ nach der Gattung des Oberbegriffs des Anspruchs 1.

Ein solches Stativ ist beispielsweise aus dem DE-GM 19 79 346 bekannt. Von Nachteil hierbei ist, daß eine Einstellung der Friktionseinstelleinrichtung nur durch Abnehmen der Traglast möglich ist, da es sonst den Zugang zum Einstellen versperren würde. Außerdem kann dieses Einstellen entweder nur mit einem Spezialwerkzeug oder nur gegen die Federkraft des nach unten gedrückten und gesicherten Teleskoprohrs erfolgen. Außerdem ist von Nachteil, das die Gewichtsausgleichseinrichtung nicht variierbar eingestellt werden kann.

Es ist daher Aufgabe der Erfindung, ein gattungsgleiches Teleskcpstativ zu schaffen, das durch einfache Maßnahmen ein einfaches Einstellen der Friktion und des Gewichtsausgleichs ermöglicht.

Diese Aufgabe wird nach dem kennzeichnenden Teil des Anspruchs 1 gelöst. Eine vorteilhafte Weiterbildung der Erfindung geht aus dem Unteranspruch hervor.

Hierdurch ergeben sich folgende Vorteile:
- Einstellbarkeit der Friktion und des Gewichtsausgleichs von außen bei aufgesetzter Last ohne Spezialwerkzeug.
- Friktionsverschleiß kann von Benutzer selbst nachjustiert werden.
- Variantenvielfalt von verschiedenen Stativen für verschiedene Lasten verringert durch die Möglichkeit der einstellbaren Gewichtsausgleichseinrichtung.
- Vereinfachte Werksvorjustage.

Die Erfindung wird anhand eines Ausführungsbeispiels näher beschrieben.

Es zeigt:
- Figur 1: in einer Seitenansicht ein Teleskopstativ;
- Figur 2: in einer geschnittenen Seitenansicht das Teleskopstativ unter Fortlassung einer Standeinrichtung und einer zu tragenden Last, und
- Figur 3: das Teleskopstativ wie Figur 2, jedoch anstelle eines inneren Einstellelements ein zusätzlich äußeres.

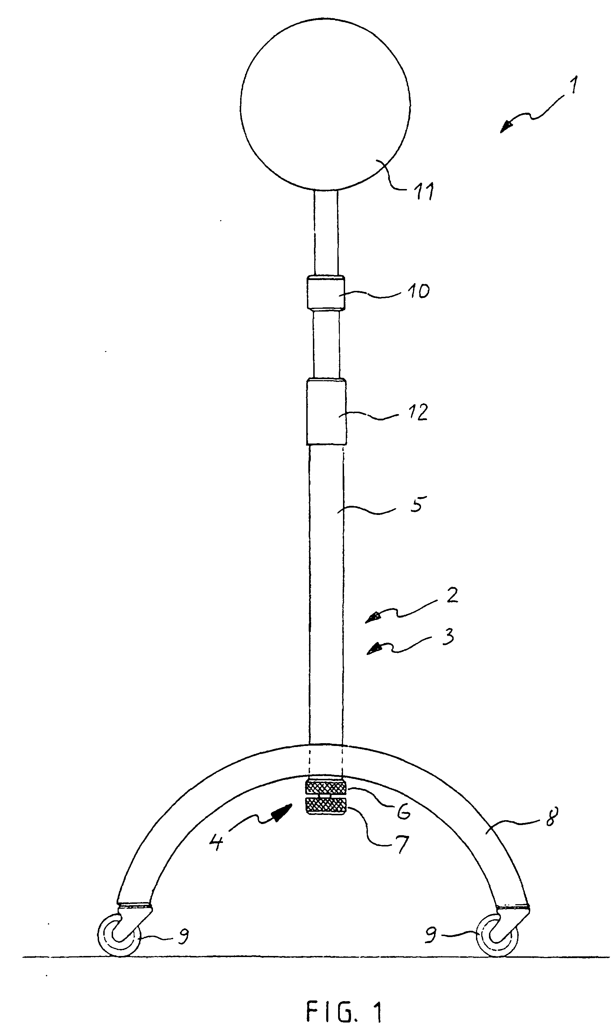

In der Figur 1 ist ein höhenverstellbares Teleskopstativ 1 dargestellt, das mit einer Friktionseinstelleinrichtung 2 und mit einer einstellbaren Gewichtsausgleichseinrichtung 3 versehen ist. Ein unteres, freistehendes Ende 4 eines Stativrohrs 5 ist mit zwei manuell betätigbaren Einstellelementen 6, 7 versehen zum Einstellen der Friktion und des Gewichtsausgleichs, wobei das Stativrohr 5 oberhalb des unteren, freistehenden Endes 4 mit einer Standeinrichtung 8 verbunden ist. Die Standeinrichtung 8 kann wahlweise mit Laufrädern 9 versehen werden. Durch das freistehende Ende 4 - welches bisher zur Befestigung mit einem Ständer diente - sind die Einstellelemente 6, 7 zum Einstellen einfach zu erreichen. Oberhalb des Stativrohrs 5 ist ein Tragrohr 10 zum Tragen einer Last 11 angeordnet. Ein oberes Führungsteil 12, welches mit dem Stativrohr 5 verbunden ist, ist zum Führen des Tragrohrs 10 vorgesehen. Nach der Figur 1 ist ein äußeres Einstellelement 6 für den Gewichtsausgleich und ein äußeres Einstellelement 7 für die Friktion angeordnet.

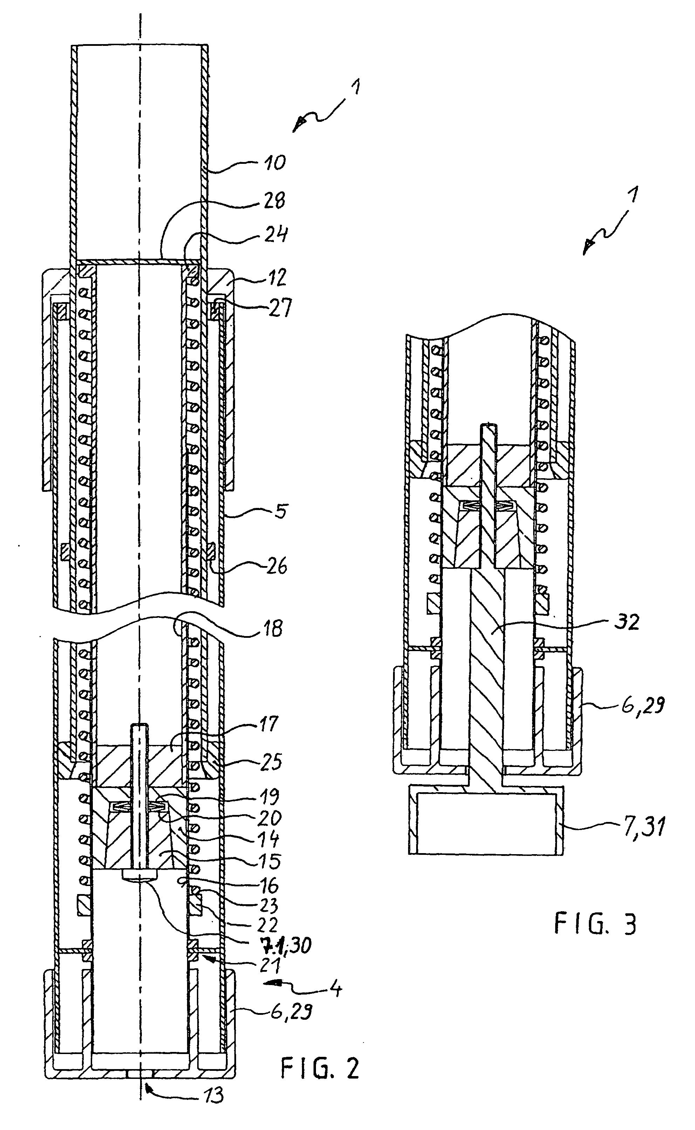

Nach der Figur 2 ist ein äußeres Einstellelement 6 für den Gewichtsausgleich und ein inneres Einstellelement 7.1 für die Friktionseinstellung vorgesehen, wobei das innere als eine Schraube ausgebildetes Einstellelement 7.1 durch einen handelsüblichen Schraubendreher durch eine Öffnung 13 des äußeren Einstellelements 6 betätigt werden kann. Mit dem Einstellelement 7.1 wird ein Reibbremsteil 14 mittels eines Konusteils 15 gegen ein unteres Teleskoprohr 16 gespannt. Ein Gewindeteil 17 ist mit einem oberen Teleskoprohr 18 fest verbunden. Axial zwischen dem Konusteil 15 und dem Reibbremsteil 14 ist eine Rückstelleinrichtung mittels zweier Tellerfedern 19, 20 vorgesehen. Das Einstellelement 6 ist als ein Handrad ausgestaltet und drehfest mit dem unteren Teleskoprohr 16 fest verbunden und gegen axiales Abziehen gesichert. Durch ein Drehlager 21 läßt sich das untere Teleskoprohr 16 relativ zum Stativrohr 5 drehen, wodurch mittels eines Gewinderings 22 eine Vorspannung einer Druckfeder 23 eingestellt werden kann. Der Gewindering 22 ist derart ausgebildet, daß er sich durch Drehung des Einstellelements 6 nicht mitdrehen kann, sondern sich nur axial verschieben läßt. Als Gegenlager der Druckfeder 23 dient am oberen Ende des oberen Teleskoprohrs 18 ein Federanschlag 24, der federnd an einem Tragrohranschlag 28 anliegt. Das untere Ende des Tragrohrs 10 ist fest mit einem Führungsring 25 verbunden. Zur Höheneinstellbegrenzung ist einerseits das Tragrohr 10 mit einem Anschlagring 26 und andererseits das Stativrohr 5 mit einem oberen Anschlagring 27 verbunden.

In der Figur 3 ist das innere Einstellelement 7.1 nach der Figur 2 als ein äußeres Einstellelement 7 zum manuellen Einstellen der Friktion dargestellt. Von Vorteil hierbei ist, daß kein Werkzeug zum Einstellen der Friktion wie auch des Gewichtsausgleiches benötigt wird.

### Bezugszeichenliste

- 1: Teleskopstativ
- 2: Friktionseinstelleinrichtung
- 3: Gewichtsausgleichseinrichtung
- 4: Unteres, freistehendes Ende
- 5: Stativrohr
- 6,7,7.1: Einstellelement
- 8: Standeinrichtung
- 9: Laufrad
- 10: Tragrohr
- 11: Last
- 12: Oberes Führungsteil
- 13: Öffnung
- 14: Reibbremsteil
- 15: Konusteil
- 16: Unteres Teleskoprchr
- 17: Gewindeteil
- 18: Oberes Teleskoprohr
- 19, 20: Tellerfeder
- 21: Drehlager
- 22: Gewindering
- 23: Druckfeder
- 24: Federanschlag
- 25: Führungsring
- 26, 27: Anschlagring
- 28: Tragrohranschlag
- 29,31: Handrad
- 30: Schraube
- 32: Drehwelle

## Patentansprüche

1. Höhenverstellbares Teleskopstativ (1) mit einem unteren Stativrohr (5) mit einem unteren Ende (4), einem oberen Tragrohr (10), einer Friktionseinstelleinrichtung (2) und einer Gewichtsausgleichseinrichtung (3), **dadurch gekennzeichnet, dass** das untere Stativrohr (5) oberhalb des unteren Endes (4) durch eine Standeinrichtung (8) freistehend abgestützt ist, wobei am unteren Ende (4) des unteren Stativrohrs (5) die Gewichtsausgleichseinrichtung (3) mit einem ersten manuell betätigbaren Einstellelement (6) und die Friktionseinstelleinrichtung (2) mit einem zweiten gegebenenfalls manuell betätigbaren Einstellelement (7,7.1) versehen ist.

2. Teleskopstativ nach Anspruch 1, **dadurch gekennzeichnet, dass** das erste Einstellelement (6) als ein erstes Handrad (29) ausgestaltet ist, wobei eine zentrische Öffnung (13) des ersten Einstellelements (6) mit dem zweiten als eine Schraube (30) ausgebildetes Einstellelement (7.1) korrespondiert.

3. Teleskopstativ nach Anspruch 1, **dadurch gekennzeichnet, dass** das erste Einstellelement (6) als ein erstes Handrad (29) und das zweite Einstellelement (7) als ein weiteres, darunter angeordnetes zweites Handrad (31) vorgesehen ist, wobei eine Drehwelle (32) des zweiten Einstellelements (7) über eine zentrische Öffnung (13) des ersten Einstellelements (6) mit der Gewichtsausgleichseinrichtung (3) korrespondiert.

## Claims

1. Height-adjustable telescopic stand (1) having a bottom stand tube (5) with a bottom end (4), a top supporting tube (10), a friction-adjusting device (2) and a weight-counterbalancing device (3), **characterized in that** the bottom stand tube (5) is supported in a free-standing manner above the bottom end (4) by a stand device (8), it being the case that, at the bottom end (4) of the bottom stand tube (5), the weight-counterbalancing device (3) is provided with a first, manually actuable adjusting element (6) and the friction-adjusting device (2) is provided with a second, if appropriate manually actuable adjusting element (7, 7.1).

2. Telescopic stand according to Claim 1, **characterized in that** the first adjusting element (6) is configured as a first handwheel (29), a central opening (13) of the first adjusting element (6) corresponding with the second adjusting element (7.1), which is designed as a screw (30).

3. Telescopic stand according to Claim 1, **characterized in that** the first adjusting element (6) is provided as a first handwheel (29) and the second adjusting element (7) is provided as a further, second handwheel (31), which is arranged therebeneath, a rotary shaft (32) of the second adjusting element (7) corresponding with the weight-counterbalancing device (3) via a central opening (13) of the first adjusting element (6).

## Revendications

1. Support télescopique ajustable en hauteur (1), comprenant un tube de support inférieur (5) avec une extrémité inférieure (4), un tube porteur supérieur (10), un dispositif d'ajustement par friction (2) et un dispositif d'équilibrage du poids (3), **caractérisé en ce que** le tube de support inférieur (5) est supporté de manière autoportante au-dessus de l'extrémité inférieure (4) par un dispositif de pied (8), où, à l'extrémité inférieure (4) du tube de support inférieur (5), le dispositif d'équilibrage du poids (3) est pourvu d'un premier élément d'ajustement (6) actionnable manuellement et le dispositif d'ajustement par friction (2) est pourvu d'un deuxième élément d'ajustement (7, 7.1) éventuellement actionnable manuellement.

2. Support télescopique selon la revendication 1, **caractérisé en ce que** le premier élément d'ajustement (6) est configuré comme une première roue à main (29), une ouverture centrale (13) du premier élément d'ajustement (6) correspondant au deuxième élément d'ajustement (7.1) réalisé en tant que vis (30).

3. Support télescopique selon la revendication 1, **caractérisé en ce que** le premier élément d'ajustement (6) est prévu en tant que première roue à main (29) et le deuxième élément d'ajustement (7) est prévu en tant que deuxième roue à main supplémentaire (31) placée en dessous, un arbre de rotation (32) du deuxième élément d'ajustement (7) correspondant, par une ouverture centrale (13) du premier élément d'ajustement (6), au dispositif d'équilibrage du poids (3).
